# EUROPÄISCHE PATENTSCHRIFT

(11) **EP 3 821 558 B1**
(45) Veröffentlichungstag und Bekanntmachung des Hinweises auf die Patenterteilung: **08.06.2022**
(21) Anmeldenummer: 18742974.1
(22) Anmeldetag: 12.07.2018
(51) Int. Cl.: H04L 9/08, H04L 9/32, G06F 16/10

(54) **VERFAHREN ZUM AUFBAU EINES SICHEREN HIERARCHISCHEN REFERENZIERUNGSSYSTEMS**
METHOD FOR ESTABLISHING A SECURE HIERARCHICAL REFERENCING SYSTEM
PROCÉDÉ POUR ÉTABLIR UN SYSTÈME DE RÉFÉRENCEMENT HIÉRARCHIQUE SÉCURISÉ

(43) Veröffentlichungstag der Anmeldung: 19.05.2021
(73) Patentinhaber: SECLOUS GmbH, 90763 Fürth (DE)
(72) Erfinder: REHNELT, Kai, 90763 Fürth (DE)
(74) Vertreter: Feller, Frank
(86) Internationale Anmeldenummer: PCT/EP2018/068919
(87) Internationale Veröffentlichungsnummer: WO 2020/011358

(56) Entgegenhaltungen:
- US-A1- 2002 194 209
- US-B1- 8 005 227
- EREL GERON ET AL: "CRUST: Cryptographic Remote Untrusted Storage without Public Keys", INTERNATIONAL ASSOCIATION FOR CRYPTOLOGIC RESEARCH,, Bd. 20070710:142056, 10. Juli 2007 (2007-07-10), Seiten 1-32, XP061002642, DOI: 10.1109/SISW.2007.9 [gefunden am 2007-07-10]
- MAHESH KALLAHALLA* ERIK RIEDELT RAM SWAMINATHAN* QIAN WANGT KEVIN FU PRG: "Plutus: Scalable secure file sharing on untrusted storage", USENIX,, 20. März 2003 (2003-03-20), Seiten 1-15, XP061009763, [gefunden am 2003-03-20]

## Beschreibung

Ziel der Erfindung ist ein leistungsoptimiertes sicheres hierarchisches Referenzierungssystem, beispielsweise zur Umsetzung eines verschlüsselten Datei-Systems (CFS, Crytographic File System), in welcher Dateien oder andere Daten in einer kryptographischen Baumstruktur auf einer nicht-vertrauenswürdigen Umgebung abgelegt werden. Dies funktioniert mittels adaptiver kryptographischer Zugriffskontrolle (ACAC, Adaptive Cryptographic Access Control), bei welcher die Daten auf Seite des Clients (Benutzers) mit Schlüsseln verschlüsselt werden. Dabei sollen alle Schlüssel (mit Ausnahme eines Einstiegsschlüssels) **nicht gespeichert, sondern berechnet** werden, sowie **für jedes Element** im Referenzierungssystem (z.B. Dateien, Datensätze, Kommentare) **ein eigener symmetrischer Schlüssel genutzt werden,** damit auf Element-Ebene ausgewählten Dritten Lese- und Schreibmöglichkeit gewährt und bei Bedarf aktiv wieder zu entzogen werden kann (Sharing / Revoke).

Dieses Referenzierungssystem ersetzt dabei klassische Zugriffs- und Authentifizierungsverfahren, und ermöglicht aufgrund der symmetrischen Schlüssel auf Einzelelementbasis nicht nur einen performanten und fehler-toleranten Zugriff, sondern insbesondere auch die Möglichkeit des aktiven Entzuges einzelner Elemente.

Aus Effizienzgründen wird bei der Verschlüsselung ein Lazy-Revoke-Ansatz genutzt, d.h. eine Generierung eines neuen Schlüssels nach einem Revoke eines Benutzers erfolgt nicht sofort, sondern erst beim Speichern der Daten.

### Stand der Technik

Nach aktuellem Stand der Technik existiert kein Verfahren, das obige Ziele abdecken kann. Bekannte Verfahren decken Teilanforderungen ab, sind aber nach aktuellem Stand der Technik nicht miteinander kombinierbar.

Das Ziel des "nicht-speicherns" von Schlüsseln lässt sich mit sogenannten Depended Key Modellen wie dem Verfahren zur Schlüssel-Ableitung (KDA, Key Derivation Algorithm) erreichen, da sämtliche verwendeten Schlüssel berechnet und nicht zufällig generiert werden. Allerdings widerspricht dieses Verfahren dem Ziel eines **leistungsoptimierten Referenzierungssystems,** da beim Entzug von Berechtigungen eine komplette Neuverschlüsselung aller referenzierten Datenelemente notwendig wird (Active-Revoke). Dieses Leistungsproblem ließe sich durch den Lazy-Revoke Ansatz lösen. Lazy-Revoke ist eine wesentliche Anforderung an heutige Cloud-Speicher-Systeme, insbesondere, wenn eine Benutzer-Gruppe sehr große Mengen an Daten miteinander teilt. Im Gegensatz zum Active Revoke Verfahren, bei dem bei einem Entzug (Revoke) von Daten bei einem Client-basierten Verschlüsselungsverfahren zunächst alle Daten zum Client heruntergeladen, mit neuen Schlüsseln verschlüsselt, und die neu verschlüsselten Daten wieder zum Server hochgeladen werden müssen, werden beim Lazy-Revoke Daten immer nur dann neu verschlüsselt, wenn sie geändert wurden - und damit in jedem Fall neu verschlüsselt werden müssten. Lazy-Revoke geht somit den Kompromiss ein, dass Personen, die Zugriff auf die verschlüsselten Daten hatten, weiterhin Zugriff auf diese Daten haben, solange diese Daten nicht verändert werden.

Die Sicherheit ist bei Lazy-Revoke dadurch gewährleistet, dass nicht-veränderte Daten weiterhin durch die bisherige Verschlüsselung geschützt sind, und neue oder geänderte Daten mit neuen Schlüsseln verschlüsselt, und diese Schlüssel an die Benutzer verteilt werden, die auch nach dem Zugriffsentzug weiterhin Zugriffserlaubnis auf diese Daten haben.

Das Lazy-Revoke Verfahren steht allerdings beim aktuellen Stand der Technik mit dem KDA im Widerspruch, da dadurch die Schlüssel-Kette, beginnend vom Einstiegsschlüssel, nicht mehr durchgängig wäre (beim KDA wird jeder untergeordnete Schlüssel unter Nutzung seinen Vorgänger berechnet, beim Lazy-Revoke kann jedoch ein Element mehrere zugeordnete Schlüssel aufweisen, wodurch die Schlüssel-Berechnung nicht mehr eindeutig ist). Daher müssen beim Lazy-Revoke Ansatz sämtliche verwendeten Schlüssel gespeichert und verteilt werden (resultierend in einem Independend Key Model), was im Widerspruch zu dem Ziel steht **keine Schlüssel zu speichern.**

Ein Kompromiss im Stand der Technik ist das Key Management Verfahren von Atallah, Frikken und Blanton (und dessen Varianten), bei dem beim Independend Key Model die Notwendigkeit der Schlüsselverteilung an alle Berechtigten dadurch ersetzt wird, dass öffentliche Hilfswerte für jedes Element eingeführt werden, wobei sich diese Werte aus dem Hash des Elternschlüssels abzüglich dem Wert des Knotenschlüssels errechnen lassen. Analog wird ein Knotenschlüssel dadurch berechnet, dass der Hash des Hilfsschlüssels vom Hash des Elternschlüssels abgezogen wird. Allerdings müssen nun für jedes Element die öffentlichen Hilfsschlüssel abgespeichert werden, und der Verlust eines Hilfsschlüssels bedeutet somit den Verlust aller untergeordneten Knotenschlüssel. Dies steht im Widerspruch zu dem Ziel ein **sicheres und fehlertolerantes Referenzierungssystem** zu erreichen.

Ein weiterer großer Nachteil von Lazy-Revoke ist das dauerhaft rechenintensive und durch das notwendige Speichern der Schlüssel Overhead-belastete Schlüssel-Management (Schlüssel-Generierung und Verteilung). Um das Ziel der Erfindung zu erreichen, dass für jedes einzelne Datenelement unabhängig austauschbare Schlüssel verwendet werden können, müsste beim Lazy-Revoke jeder einzelne Schlüssel gespeichert werden. Im Fall das die Daten auch mit Dritten geteilt werden sollen, müsste dieser Schlüssel sogar verschlüsselt (beispielsweise mit dem öffentlichen RSA Schlüssel der dritten Partei) gespeichert werden. Damit wäre es beispielsweise notwendig beim Teilen von Daten mit 3 Parteien, 4 verschlüsselte Schlüssel zu speichern (einmal verschlüsselt mit dem eigenen Schlüssel, und dann jeweils mit dem öffentlichen Schlüssel der Dritten Partei). Wenn man nun ein System mit vielen Daten und Nutzern zugrunde legt, wird deutlich warum aufgrund des Overheads und der Komplexität des Schlüsselmanagements, Lazy-Revoke auf Einzelelement-Basis in der Praxis nicht angewendet wird - es wäre sonst notwendig, für jeden Daten-Knoten und Nutzer wie beschrieben einen spezifischen Schlüssel zu speichern, zu verteilen, und dies bei jedem Hinzufügen und insbesondere dem Entzug von Nutzern durchzuführen. Somit ist das Ziel des **leistungsorientierten Referenzierungssystems** für jedes Element damit nicht erreichbar.

Um es in der Praxis anwendbar zu machen, muss die Anzahl der benötigten gespeicherten Schlüssel reduziert werden. Dies geschieht im Stand der Technik durch eine Zusammenfassung von Daten in Berechtigungs-Gruppen (beispielsweise Dateien in Verzeichnissen) wodurch alle Daten innerhalb einer Berechtigungs-Gruppe mit den gleichen Schlüsseln verschlüsselt werden können. Jede Berechtigungsgruppe muss dabei ihre Schlüssel unabhängig von den Schlüsseln der anderen Berechtigungsgruppen austauschen können. Aufgrund dieser Unabhängigkeit ist es nicht mehr notwendig Daten innerhalb einer Berechtigungsgruppe sofort nach Entzug der Berechtigung von einem Dritten neu zu verschlüsseln, sondern es ist ausreichend ein Merkmal (in der Fachsprache als "Dirty-Flag" bezeichnet) rekursiv für Elemente des Baumes (z.B. Unterverzeichnisse und Dateien) zu setzen. Es wird dann erst beim Speichern (Ändern, Hinzufügen) von Daten geprüft, ob dieses Merkmal gesetzt ist (und somit ein neuer Schlüssel für diese Berechtigungsgruppe generiert und an alle berechtigten Dritten verteilt werden muss), oder ob es ausreicht einen vorhandenen Schlüssel zu verwenden (wenn das Dirty-Flag nicht gesetzt ist). Nach Verschlüsselung der Daten mit einem neuen Schlüssel wird das "Dirty-Flag" für diese Berechtigungsgruppe entfernt.

Dabei bleibt die Verteilungsproblematik (zwar für weniger Schlüssel) bestehen, allerdings auf Kosten der nicht mehr gegebenen Möglichkeit der Referenzierung auf einzelne Daten, sondern nur auf Berechtigungsgruppen (z.B. Verzeichnisse, Datenräume). Darüber hinaus ist es notwendig für jedes Element (beispielsweise einer Datei) der Gruppe eine Referenz auf den für dieses Element verwendeten Schlüssel zu erstellen, da es aufgrund dieses Vorgehens mehrere Schlüssel für eine Berechtigungsgruppe geben kann.

Dies könnte im Stand der Technik mit 2 Listen erzielt werden, die der Berechtigungsgruppe zugeordnet werden. Zum einem einer **Schlüssel-Liste,** in der alle in der jeweiligen Berechtigungsgruppe verwendeten Schlüssel in unverschlüsselter Form abgelegt werden, sowie einer zweiten **Referenz-Liste,** in der alle Elemente (Dateien) der Berechtigungsgruppe zusammen mit einem Verweis auf den für die Verschlüsselung des Elementes verwendeten Schlüssel gespeichert werden.

Zur optimierten Speicherung und Berechnung können derartige **Schlüssel-Listen** im Stand der Technik durch kryptographische Links erreicht werden, beispielsweise:
A) Durch eine Hash-Liste, wobei sich der jeweils aktuelle Schlüssel als **NeuerSchlüssel = Sicherer-Hash (VorhergehenderSchlüssel, "Salt")** berechnet.

In diesem Fall wird eine Liste mit einer **vorgegebenen Anzahl** an Elementen (Schlüsseln) durch eine Verkettung von Hashes ausgehend von einem Startpunkt generiert. Üblicherweise wird die Berechnung noch um eine zufällig gewählte Zeichenfolge (als "Salt" bezeichnet) ergänzt, um die Entropie der Berechnung zu erhöhen. Durch diese verkettete Liste wird es unter anderem möglich, ein beliebiges Element (Schlüssel) dieser Liste inklusive seiner Position zu verteilen und daraus die weiterfolgenden Elemente (Schlüssel) zu berechnen. Es ist aber nicht möglich, von dem Startpunkt aus diesem vorhergehende Schlüssel zu berechnen, da sichere Hash-Funktionen Einweg-Funktionen sind. Daher ist es notwendig bei der Anforderung eines neuen Schlüssels, das dem aktuellen Element (Schlüssel) vorhergehende Element (Schlüssel) durch die Person, welche die ausreichend lange Hash-Liste berechnet hat, weiterzugegeben.

In einer solchen Liste muss daher für den **Eigentümer** der letzte Eintrag in der Liste gespeichert werden (bzw. muss es aus geheimen Informationen errechenbar sein), von dem aus alle vorhergehenden Schlüssel berechnet werden können. Das letzte Element in der Liste entspricht dabei dem ersten Schlüssel, das vorletzte Element dem zweiten Schlüssel usw.

Der Vorteil, dass nur ein Schlüssel für den Zugriff gespeichert werden muss, wird also durch die Notwendigkeit einer vorgegebenen Länge erkauft. Wird diese zu klein gewählt, stehen ggf. nicht ausreichend Schlüssel zur Verfügung, würde sie zu groß gewählt, würde es zur langen und unnötigen Berechnungszeiten kommen, da jeweils die Berechnung beim letzten Element startet (würde beispielsweise die Länge von einer Million gewählt, es aber aktuell nur 3 Schlüssel geben, so müssten alle Schlüssel beginnend mit dem Millionsten Eintrag herunter bis zum dritten Schlüssel berechnet werden). Aus diesem Grund kommt diese Möglichkeit praktisch nicht zum Einsatz.

B) Als eine Schlüssel-Liste, wobei sich der jeweils aktuelle Schlüssel nicht über eine Hash-Funktion, sondern über symmetrische oder asymmetrische Verschlüsselung dergestalt **AktuellerSchlüssel = AES_decrypt (AktuellerSchlüssel, Nachfolge-Schlüssel)** berechnet (siehe etwa Patent US 7203317B2).

In diesem Fall ist die Länge der Liste nicht von Anfang an vorgegeben, sie kann beliebig erweitert werden. Es wird jeweils der aktuelle Schlüssel mit seinem Nachfolge-Schlüssel verschlüsselt, wodurch jeder Schlüssel vom Anwender frei gewählt werden kann. Im Gegensatz zu den Hash-Listen muss aber für jeden Knoten ein Eintrag (der frei gewählte Nachfolge-Schlüssel) gespeichert werden.

Dies führt dazu, dass es zum einem für die gleichen Daten mitunter eine Vielzahl an aktuellen Schlüsseln gibt, deren Basisschlüssel jeweils gespeichert werden müssen. Darüber hinaus muss für jeden Knoten und zugriffsberechtigte Partei sichergestellt werden, dass alle benutzten Schlüssel vorhanden sind, womit sich Probleme bei der Fehlertoleranz ergeben.

Schlüssel können darüber hinaus erst dann verworfen werden, wenn sichergestellt ist, dass keine der Daten mehr mit diesem Schlüssel verschlüsselt sind. Entsprechend steigen auch der Overhead und die Komplexität zur Schlüssel-Speicherung und -Verteilung. E. Geron, A. Wool: "CRUST: Cryptographic Remote Untrusted Storage without Public Keys" offenbart ein verschlüsseltes Dateisystem mit baumstrukturbasierter Schlüsselverwaltung.

Die Patentdruckschrift US 8,005,227 offenbart ein Verfahren, wobei Hashwerte zweier Listen verglichen werden, und bei deren Nichtübereinstimmung der Bedarf eines Schlüsselgenerierungsschritts erkannt wird (s. Zusammenfassung sowie Spalte 2, Zeile 39, bis Spaltet 3, Zeile 39).

The USENIX Association: "Plutus: Scalable secure file sharing on untrusted storage" offenbart ein verschlüsseltes Dateisystem mit optimierter Schlüsselverwaltung und einer Lazy-Revocation-Herangehensweise (s. insb. Kapitel 3).

Die Patentanmeldungsdruckschrift US 2002/194209 offenbart eine baumartige indexierte Daten- und Zusatzdatenstruktur zur Authentifizierung von verschlüsselten Daten.

Um die beschriebenen Probleme und Nachteile zu lösen wurde daher ein neues Verfahren zur Erreichung der anfangs beschriebenen Ziele notwendig, wobei Ideen aus bestehenden Verfahren aufgegriffen, optimiert und um neue Verfahrensschritte ergänzt wurden, was in der vorliegenden Erfindung resultiert.

### Ablauf des Verfahrens

Um das Schlüssel-Management zu vereinfachen und die Speicherung von Schlüsseln bei Lazy-Revoke zu minimieren, werden in der vorliegenden Erfindung die Daten-Knoten-Schlüssel unter anderem aus dem Daten-Knoten-Schlüssel des Vater-Daten-Knotens hergeleitet. Da es aber beim Lazy-Revoke sein kann, dass die Kinder-Knoten einen älteren Schlüssel haben als der Vater-Knoten, ist es notwendig sich zu merken, welche Version des Vaterschlüssels gerade aktuell ist.

Da sich der Vater-Daten-Knoten-Schlüssel unabhängig ändern kann, ist es ein wesentlicher Bestandteil der Erfindung, bei jedem Daten-Knoten eine temporäre (flüchtige) **Daten-Knoten-Schlüssel-Liste** zu halten, in der die den jeweiligen Schlüsseln zugeordneten Schlüssel-Indizes vermerkt werden. Innerhalb dieser Liste werden die dem Daten-Knoten zugeordneten Schlüssel in einer nummerierten Liste abgelegt, wobei der letzte Eintrag in der Liste dem aktuellen Schlüssel entspricht.

Zusätzlich ist es notwendig, für jeden Daten-Knoten zu jedem Schlüssel zu vermerken, unter Zuhilfenahme welches Vater-Daten-Knoten-Schlüssels er generiert wurde. Dies wird erfindungsgemäß mit der (nichtflüchtigen, d.h. gespeicherten) **Daten-Knoten-Schlüssel-Parameter-Liste** erreicht, in der die Indizes der Kind- und Vater-Schlüssel verlinkt werden. Damit können für jeden Kinder-Daten-Knoten die zu den gespeicherten Eltern-Indizes zugehörigen Schlüssel herausgefunden werden (womit wiederum die verwendeten Geheimnisse für die Berechnung der Schlüssel der Kinder-Knoten verfügbar werden).

Nur mit der Kombination dieser beiden Listen wird es ermöglicht, die Vorteile des Active-Revoke zu nutzen und zu erweitern (ein berechneter aktueller Daten-Knoten-Schlüssel je Daten-Knoten für die Ver- und Entschlüsselung, statt der Notwendigkeit dauerhaft gespeicherter Schlüssel) und mit den Vorteilen des Lazy-Revoke (Daten immer nur dann neu zu verschlüsseln, wenn sie gespeichert werden) zu kombinieren. Damit wird die heute übliche Schlüssel-Speicherung und -Verteilung durch eine **durchgängige Schlüssel-Berechnung** ersetzt. Diese Kombination ist im Stand der Technik weder bekannt noch für den Fachmann ersichtlich.

Da die Daten-Knoten-Schlüssel einen der zumindest zuvor verwendeten Daten-Knoten-Schlüssel des Vater-Daten-Knotens zur Generierung miteinbeziehen, ist es notwendig, dem Pfad des Baumes von der Wurzel bis hin zum speichernden Daten-Knoten zu folgen, zu prüfen an welcher Stelle der Vater-Daten-Knoten einen aktuelleren Daten-Knoten-Schlüssel hat als jener Vater-Daten-Knoten-Schlüssel, welcher als Basis für die Schlüssel-Generierung des aktuellen Daten-Knoten-Schlüssels herangezogen wurde, und die Schlüssel und Indizes gegebenenfalls zu aktualisieren, sowie die Daten mit den neuen Schlüsseln zu verschlüsseln. Dadurch wird gewährleistet, das beim Speichern der einem Daten-Knoten zugeordneten Daten vorab entlang des Pfades alle Schlüssel und Indizes aller Vater-Daten-Knoten aktualisiert wurden, und somit die Daten mit dem gültigen aktuellen Schlüssel verschlüsselt werden (den die ausgeschlossenen Benutzer nicht besitzen).

### Mehrwert des Verfahrens

Kombination der Vorteile des KDA (Schlüssel-Berechnung unter Nutzung der Schlüssel der Vater-Knoten statt Speicherung aller Schlüssel) und Lazy-Revoke (Effizienzgewinn, da nur veränderte Daten verschlüsselt werden), unter Lösung der damit im Stand der Technik verbundenen Nachteile.
- Die Notwendigkeit der Neuverschlüsselung aller Daten-Knoten beim (Active) Revoke wird durch einen Lazy-Revoke Ansatz ersetzt.
- Statt wie beim Lazy-Revoke mehrere Schlüssel für ein Knoten zu benötigen (wobei ein Knoten viele Elemente enthalten kann), gibt es nur einen aktuellen berechneten Schlüssel.
- Das im heutigen Stand der Technik übliche "Dirty-Flag" wird durch einen Vergleich ersetzt, ob der aktuelle Eltern-Schlüssel identisch mit dem in der nichtflüchtigen Liste vermerkten Vater-Schlüssel ist. Nicht identische Indizes entsprechen dabei einem gesetzten Dirty-Flag.
- Das vorliegende Verfahren erreicht alle Anforderungen, die an Lazy-Revoke gestellt werden, mit der Besonderheit, dass einzig ein Einstiegsschlüssel in dem Baum gespeichert werden muss (und nicht jeder Schlüssel). Weiters ermöglicht das Verfahren, einen eigenen Schlüssel für jeden Knoten eines Baumes zu erhalten, also beispielsweise jede Datei mit einem anderen Schlüssel zu verschlüsseln.
- Entgegen dem heute üblichen Lazy-Revoke Verfahren wird die Programmierung und der Overhead der Daten vereinfacht, da weder ein "Dirty-Flag" rekursiv für alle durch einen Rechte-Entzug betroffenen Daten-Knoten (Verzeichnisse/Dateien/...) gesetzt, noch ein konkreter Daten-Knoten-Schlüssel aus einer Liste für die Entschlüsselung vorhandener Daten-Knoten ausgewählt werden muss.

Durch die damit ermöglichten Vereinfachungen und Effizienzgewinne wird eine skalierbare Lösung für die Verschlüsselung auf Einzelelementbasis erreicht, die keine Schlüssel dauerhaft speichert und das Schlüsselmanagement massiv vereinfacht. Damit wird auch ein aktiver Rechteentzug auf Einzelelementbasis möglich.

### Kurzbeschreibung der Zeichnungen

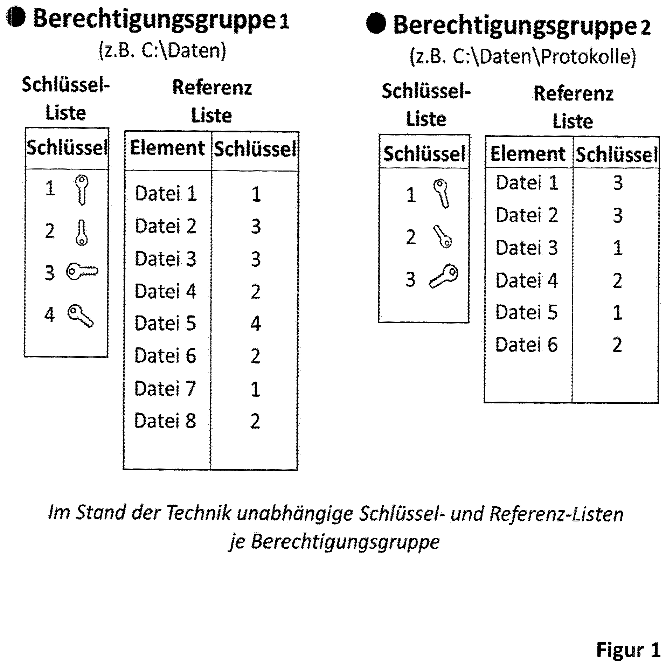

- Figur 1 zeigt ein Beispiel für die im Stand der Technik für einen Lazy-Revoke verwendeten Schlüssel- und Referenzlisten

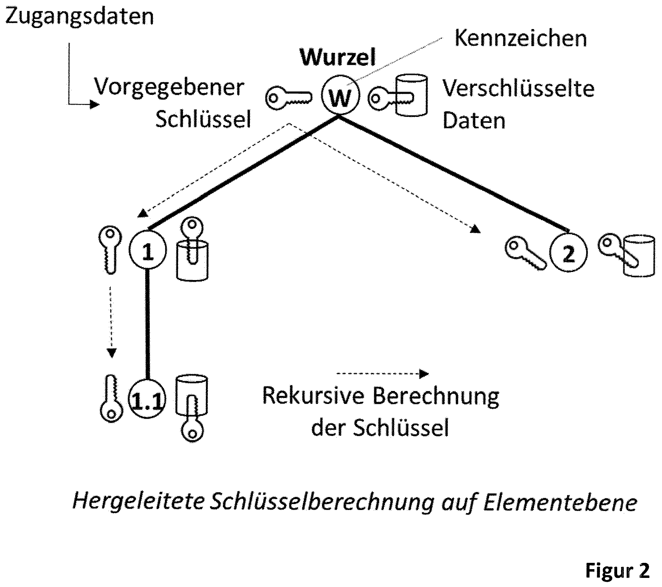

- Figur 2 zeigt die in der Präambel definierten Kern-Komponenten gemäß Anspruch 1

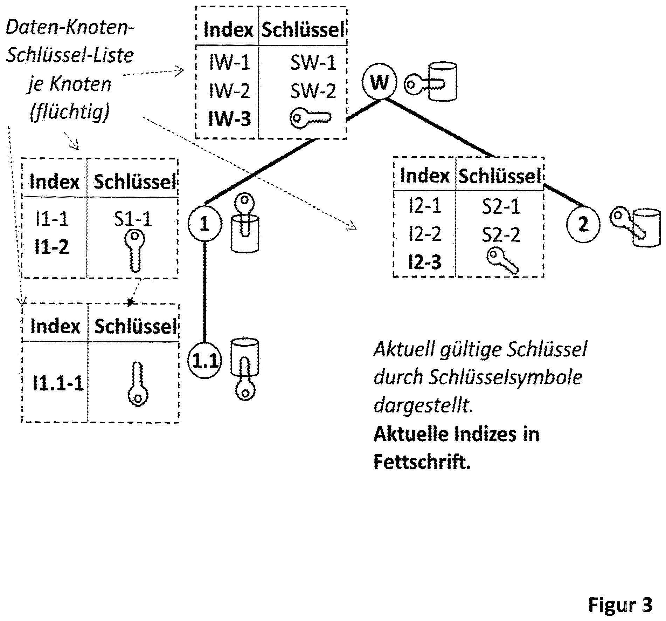

- Figur 3 zeigt ein Anwendungsbeispiel zur Erweiterung um flüchtige Daten-Knoten-Schlüssel-Listen zur Schlüsselverwaltung gemäß Anspruch 1

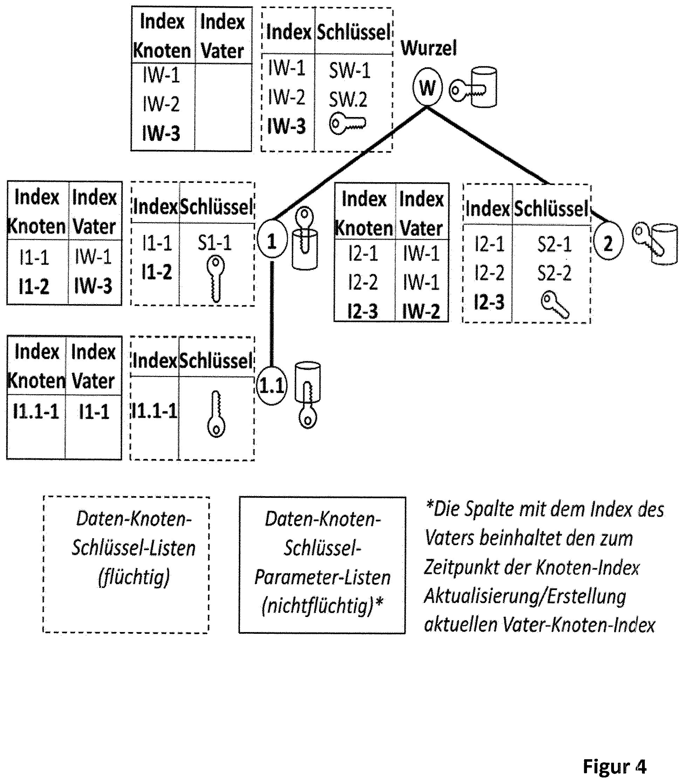

- Figur 4 zeigt ein Anwendungsbeispiel zur Erweiterung um nicht-flüchtige Daten-Knoten-Schlüssel-Parameter-Listen zur Referenzierung, sowie die Neuberechnung von Indizes und Schlüsseln gemäß Anspruch 1

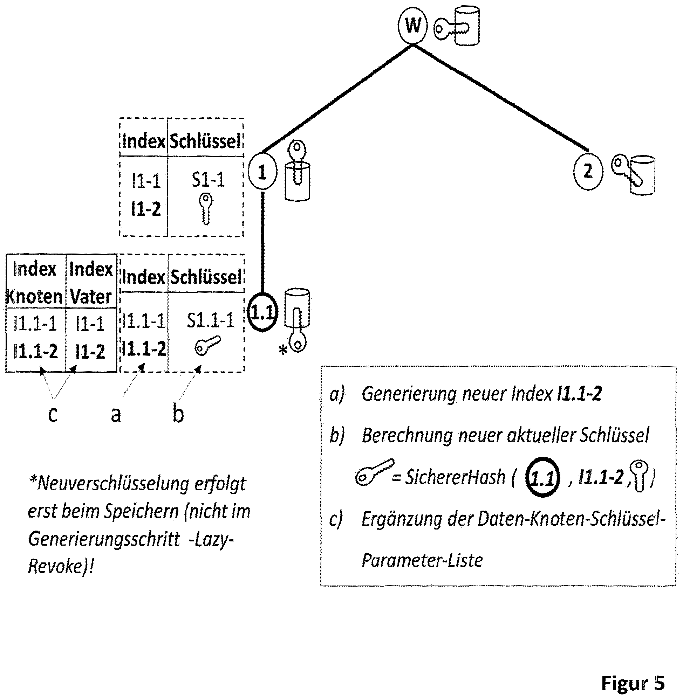

- Figur 5 zeigt ein Anwendungsbeispiel zur Durchführung des gemäß Anspruch 1 definierten Generierungsschrittes

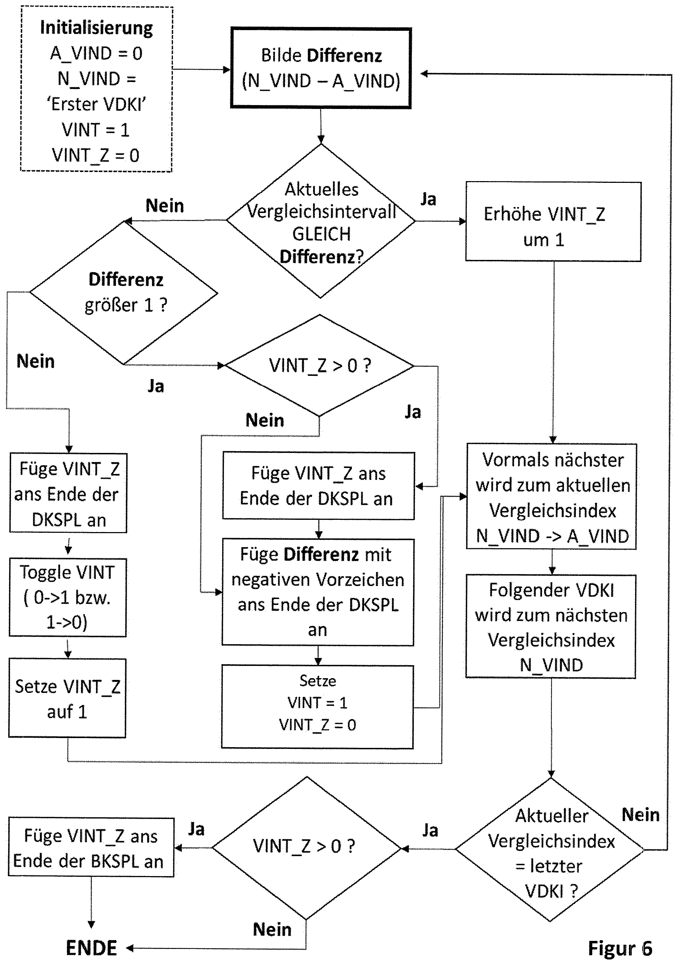

- Figur 6 beschreibt das Verfahren zur komprimierten Speicherung der Daten-Knoten-Parameter-Listen gemäß Anspruch 4

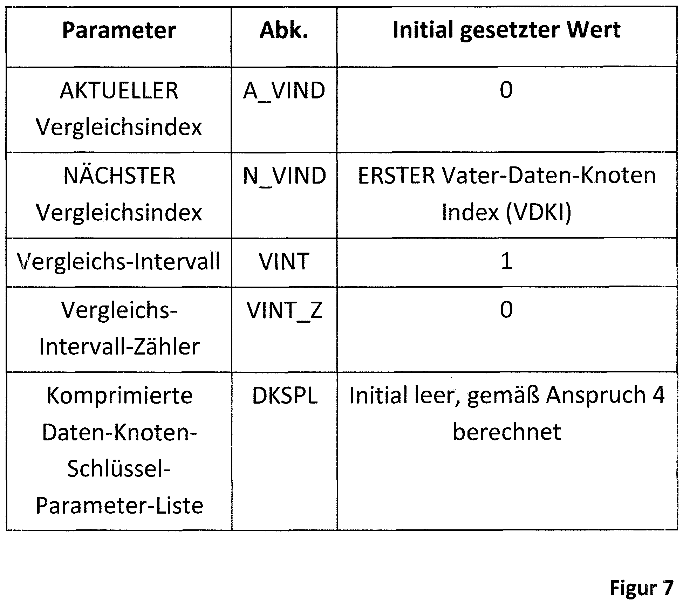

- Figur 7 beschreibt die Legende zu Figur 6

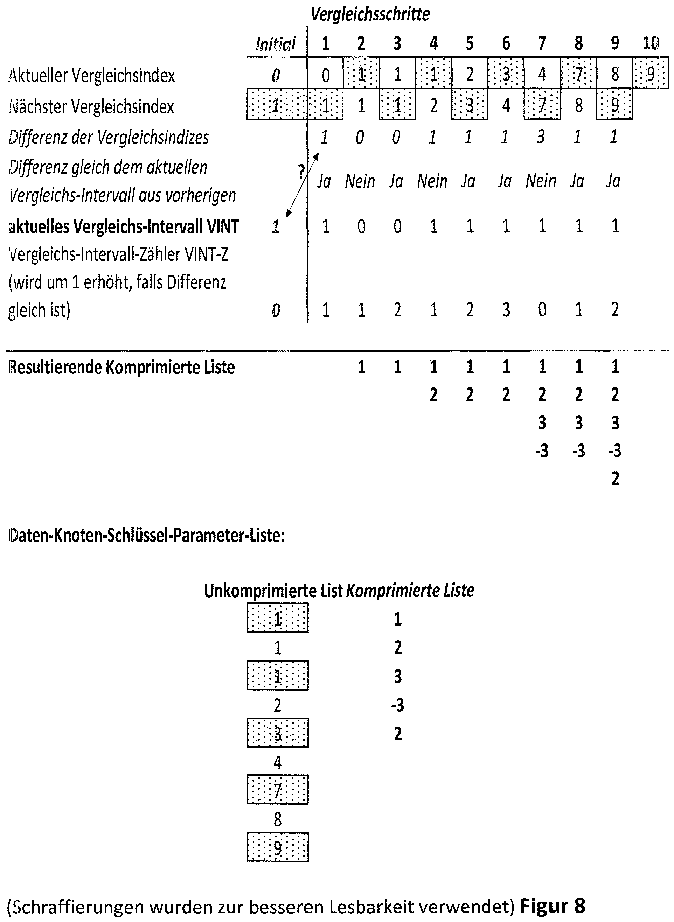

- Figur 8 beschreibt ein Anwendungsbeispiel gemäß Anspruch 4

## Patentansprüche

1. Verfahren zum Speichern und Lesen von Daten auf einer Speichervorrichtung in einer nicht-vertrauenswürdigen Umgebung, wobei diese Daten jeweils Daten-Knoten einer Baumstruktur zugeordnet sind,
und wobei jeder Daten-Knoten ein Daten-Knoten-Kennzeichen aufweist, welches ihn in Bezug auf seine Geschwister-Daten-Knoten eindeutig identifiziert,
und wobei jeder Daten-Knoten einen aktuellen Daten-Knoten-Schlüssel aufweist,
und wobei ein Wurzel-Daten-Knoten vorhanden ist, für welchen zumindest ein Daten-Knoten-Schlüssel manuell vorgegeben ist, vorzugsweise durch eine Berechnung aus Zugangsdaten,
und wobei ausgehend von dem Wurzel-Daten-Knoten rekursiv alle Kinder-Daten-Knoten ihre aktuellen Daten-Knoten-Schlüssel unter Einbeziehung des jeweiligen aktuellen Vater-Daten-Knoten-Schlüssels berechnen,
und wobei Daten vor dem Speichern auf der Speichervorrichtung mit dem aktuellen Daten-Knoten-Schlüssel des ihnen zugehörigen Daten-Knotens verschlüsselt werden,
und wobei die Daten nach dem Lesen auf der Speichervorrichtung mit dem aktuellen Daten-Knoten-Schlüssel entschlüsselt werden,
wobei ein **Daten-Knoten-Schlüssel-Generierungsschritt** definiert wird, welcher auf jeden Daten-Knoten zeitlich unabhängig beliebig oft angewendet werden kann, und in welchem bei Anwendung auf einen Daten-Knoten
ein neuer Daten-Knoten-Schlüssel-Index für diesen Daten-Knoten generiert wird,
ein Daten-Knoten-Schlüssel berechnet und als aktueller Daten-Knoten-Schlüssel festgelegt wird, indem er dem Ergebnis einer sicheren Hash-Funktion entspricht, die auf zumindest das Daten-Knoten-Kennzeichen des Daten-Knotens, den neuen Daten-Knoten-Schlüssel-Index und dem derzeit aktuellen Daten-Knoten-Schlüssel des Vater-Daten-Knotens angewandt wird,
und eine **flüchtige Daten-Knoten-Schlüssel-Liste** erstellt bzw. erweitert wird, welche eine Daten-Knoten-Schlüssel-Index-Spalte und eine Daten-Knoten-Schlüssel-Spalte enthält, indem am Ende dieser flüchtigen Liste der neue Daten-Knoten-Schlüssel-Index sowie der zuvor berechnete Daten-Knoten-Schlüssel eingefügt wird und dieser zum aktuellen Daten-Knoten-Schlüssel wird,
und eine **nichtflüchtige Daten-Knoten-Schlüssel-Parameter-Liste** für diesen Daten-Knoten erstellt bzw. erweitert wird, welche eine Daten-Knoten-Index-Spalte und eine Vater-Daten-Knoten-Index-Spalte enthält, indem am Ende dieser nichtflüchtigen Liste der neue Daten-Knoten-Schlüssel-Index des Daten-Knotens in die Daten-Knoten-Index-Spalte, und der derzeit letzte Daten-Knoten-Schlüssel-Index aus der Daten-Knoten-Schlüssel-Parameter-Liste des Vater-Daten-Knotens in die Vater-Daten-Knoten-Index-Spalte eingefügt wird, und dadurch anstatt von geheimen Schlüsseln nur öffentliche Indizes als Stellvertreter der Schlüssel nichtflüchtig gespeichert werden,
vor dem Speichern von Daten eines Daten-Knotens
der Pfad in der Baumstruktur vom Wurzel-Daten-Knoten bis zu diesem Daten-Knoten ermittelt wird,
und diesem ermittelten Pfad, beginnend mit dem ersten Kind des Wurzel-Daten-Knotens, Daten-Knoten für Daten-Knoten gefolgt wird,
und der jeweils letzte Eintrag der nichtflüchtigen Daten-Knoten-Schlüssel-Parameter-Listen eines Daten-Knotens und dessen Vater-Daten-Knotens verglichen wird, und sobald der letzte Eintrag aus der Vater-Daten-Knoten-Index-Spalte eines Daten-Knotens nicht identisch ist mit dem letzten Eintrag in der Daten-Knoten-Index-Spalte aus der Daten-Knoten-Schlüssel-Parameter-Liste seines Vater-Daten-Knotens, auf diesen Daten-Knoten und die am Pfad nachfolgenden Daten-Knoten
jeweils der zuvor definierte **Daten-Knoten-Schlüssel-Generierungsschritt** angewandt wird,
und jeweils die Daten der Daten-Knoten mit dem aktuellen Daten-Knoten-Schlüssel des ihnen zugehörigen Daten-Knotens verschlüsselt werden, und die dem Daten-Knoten zugeordnete nichtflüchtige Daten-Knoten-Schlüssel-Parameter-Liste gespeichert wird.

2. Verfahren nach Anspruch 1, wobei die fortlaufende Zeilennummerierung der nichtflüchtigen Daten-Knoten-Schlüssel-Parameter-Liste als Daten-Knoten-Schlüssel-Index für einen Daten-Knoten verwendet wird, wobei ein neuer Daten-Knoten-Schlüssel-Index dadurch berechnet wird, dass die aktuell letzte Zeilennummer um eins erhöht wird,
und somit die Speicherung der Daten-Knoten-Index-Spalte in der nichtflüchtigen Daten-Knoten-Schlüssel-Parameter-Liste entfällt, da sie sich durch die fortlaufende Nummerierung ergibt.

3. Verfahren nach Anspruch 2, wobei die Daten-Knoten-Schlüssel-Parameter-Liste in eine **komprimierte** Daten-Knoten-Schlüssel-Parameter-Liste übergeführt, und nur letztere auf der nichtflüchtigen Speichervorrichtung gespeichert wird, wobei Bereiche innerhalb der Daten-Knoten-Schlüssel-Parameter-Liste derart zusammengefasst werden, dass Bereiche mit gleichen und Bereiche mit fortlaufenden Einträgen jeweils durch einen Wert in der komprimierten Daten-Knoten-Schlüssel-Parameter-Liste repräsentiert werden.

4. Verfahren nach Anspruch 2 oder 3, wobei die Daten-Knoten-Schlüssel-Parameter-Liste in eine **komprimierte** Daten-Knoten-Schlüssel-Parameter-Liste übergeführt und nur letztere auf der nichtflüchtigen Speichervorrichtung gespeichert wird, indem die Zahl 0 als der aktuelle Vergleichs-Index und der erste Vater-Daten-Knoten-Index in der Daten-Knoten-Schlüssel-Parameter-Liste als der nächste Vergleichs-Index, der Wert 1 als aktuelles Vergleichs-Intervall, und der Wert 0 als aktueller Vergleichs-Intervall-Zähler festgelegt wird,
und ein **Vergleichs-Schritt** definiert wird, in welchem die Differenz des jeweils nächsten Vergleichs-Index mit dem jeweils aktuellen Vergleichs-Index berechnet wird und
falls die berechnete Differenz **gleich** dem aktuellen Vergleichs-Intervall ist der aktuelle Vergleichs-Intervall-Zähler um den Wert 1 erhöht wird,
falls die berechnete Differenz **ungleich** dem aktuellen Vergleichs-Intervall und **größer als 1** ist,
und sofern der aktuelle Vergleichs-Intervall-Zähler größer 0 ist, dieser an die letzte Position in die komprimierte Daten-Knoten-Schlüssel-Parameter-Liste angefügt wird,
die Differenz mit einem negativen Vorzeichen versehen und ans Ende der komprimierten Daten-Knoten-Schlüssel-Parameter-Liste angefügt wird, sowie das aktuelle Vergleichs-Intervall auf den Wert 1 und der aktuelle Vergleichs-Intervall-Zähler auf 0 festgelegt wird,
falls die berechnete Differenz **ungleich** dem aktuellen Vergleichs-Intervall und **kleiner oder gleich 1** ist,
der aktuelle Vergleichs-Intervall-Zähler an die letzte Position in die komprimierte Daten-Knoten-Schlüssel-Parameter-Liste angefügt wird,
das aktuelle Vergleichs-Intervall in Abhängigkeit seines Wertes auf 0 bzw. 1 verändert wird und der aktuelle Vergleichs-Intervall-Zähler auf 1 festgelegt wird,
und danach der vormals nächste Vergleichs-Index zum aktuellen Vergleichs-Index und der diesem nun aktuellen Vergleichs-Index folgende Vater-Daten-Knoten-Index zum nächsten Vergleichs-Index wird,
und dieser Vergleichs-Schritt auf den jeweils aktuellen Vergleichs-Index und den nächsten Vergleichs-Index solange angewandt wird, bis der aktuelle Vergleichs-Index dem letzten Vater-Daten-Knoten-Index entspricht, und abschließend der aktuelle Vergleichs-Intervall-Zähler an die letzte Position der komprimierten Daten-Knoten-Schlüssel-Parameter-Liste angefügt wird, sofern dieser größer 0 ist.

## Claims

1. Method for storing and reading data on a storage facility in an untrusted environment, whereby said data is assigned to data nodes on a tree structure,
and whereby each data node has a data node flag that clearly identifies it in relation to its sibling data nodes,
and whereby each data node has one current data node key,
and whereby a root data node is present, for which at least one data node key is manually specified, preferably by calculation from access data,
and whereby all child data nodes recursively calculate their current data node keys based on the root data node including the current parent data node key,
and whereby data is encrypted before being stored on the storage facility with the current data node key of the data node associated with it,
and whereby data is decrypted after being read on the storage facility with the current data node key,
wherein
a **data node key generation step** is defined which can be applied to each data node any number of times, time-independently, and in which when it is applied to a data node
a new data node key index is generated for that data node,
a data node key is calculated and set as the current data node key by matching the result of a secure hash function applied at least to the data node marker of the data node, the new data node key index and the current data node key of the parent data node,
and a **volatile data node key list** is created/extended, containing a data node key index column and a data node key column with the insertion of the new data node key index and the previously calculated data node key at the end of this volatile list, the latter becoming the current data node key,
and a **non-volatile data node key parameter list** is created/extended for this data node, containing a data node index column and a parent data node index column, with the insertion of the new data node key index of the data node into the data node index column and the last data node key index from the data node key parameter list of the parent data node into the parent data node index column at the end of this non-volatile list so that only public indices (as proxies for the keys) are permanently saved instead of secret keys,
before data of a data node are saved,
the path in the tree structure is identified from the root data node up to that data node,
and that identified path, starting with the first child of the root data node, is tracked data node by data node,
and the last entries in the non-volatile data node key parameter lists of a data node and its parent data node are compared,
and when the last entry from the parent data node index column of a data node is no longer identical with the last entry in the data node index column from the data node key parameter list of its parent data node, this data node and the successor data nodes on the path
undergo the previously defined **data node key generation step**,
and the data of the data nodes is encrypted using the current data node key of the data node associated with it,
and the non-volatile data node key parameter list assigned to the data node is stored.

2. Method according to Claim 1, **wherein** the sequential line numbering of the non-volatile data node key parameter list is used as data node key index for a data node, whereby a new data node key index is calculated by increasing the current last line number by one,
thereby dispensing with the need to store the data node index column in the non-volatile data node key parameter list, since it is based on the sequential numbering.

3. Method according to Claim 2, **wherein** the data node key parameter list is converted into a **compressed** data node key parameter list and only the latter is stored on the non-volatile storage facility, whereby areas within the data node key parameter list are combined such that areas with identical entries as well as areas with sequential entries are represented by corresponding values in the compressed data node key parameter list.

4. Method according to Claim 2 or 3, **wherein** the data node key parameter list is converted into a **compressed** data node key parameter list and only the latter is stored on the non-volatile storage facility, whereby the number 0 is set as the current matching index and the first parent data node index is set in the data node key parameter list as the next matching index, the value 1 is set as the current matching interval and the value 0 is set as the current matching interval counter,
and a **matching step** is defined in which the difference between the next matching index and the current matching index is calculated and
if the calculated difference is **equal** to the current matching interval the current matching interval counter is increased by the value 1,
if the calculated difference is **not equal** to the current matching interval and is **greater than 1**,
and provided that the current matching interval counter is greater than 0, the latter is attached to the last position in the compressed data node key parameter list,
a negative sign is appended to the difference and attached at the end of the compressed data node key parameter list,
and the current matching interval is set to the value 1 and the current matching interval counter is set to 0,
if the calculated difference is **not equal** to the current matching interval and is **less than or equal to 1**,
the current matching interval counter is attached to the last position in the compressed data node key parameter list,
the current matching interval is changed to 0 or 1 depending on its value and the current matching interval counter is set to 1,
and thereafter what was previously the next matching index becomes the current matching index and the parent data node index that follows what is now the current matching index becomes the next matching index,
and this matching step is applied to each current matching index and next matching index until the current matching index corresponds to the last parent data node index, and concludes by attaching the current matching interval counter to the last position in the compressed data node key parameter list, provided it is greater than 0.

## Revendications

1. Procédé de stockage et de lecture de données sur un dispositif de stockage dans un environnement non fiable, lesdites données étant respectivement associées à des nœuds de données d'une structure arborescente ;
et dans lequel chaque nœud de données comporte un identifiant de nœud de données qui l'identifie de manière unique par rapport à ses nœuds de données frères,
et dans lequel chaque nœud de données présente une clé de nœud de données actuelle,
et dans lequel il existe un nœud de données racine pour lequel au moins une clé de nœud de données est prédéfinie manuellement, de préférence par un calcul à partir de données d'accès,
et dans lequel, à partir du nœud de données racine, tous les nœuds de données enfants calculent de manière récursive leur clé de nœud de données actuelle en tenant compte de la clé de nœud de données père actuelle respective,
et dans lequel les données, avant d'être stockées sur le dispositif de stockage, sont cryptées avec la clé de nœud de données actuelle du nœud de données qui leur est associé,
et dans lequel les données, après avoir été lues sur le dispositif de stockage, sont décryptées avec la clé de nœud de données actuelle,
dans lequel **une étape de génération de clé de nœud de données** est définie, laquelle peut être appliquée à chaque nœud de données aussi souvent que nécessaire, indépendamment du temps, et dans laquelle, lorsqu'elle est appliquée à un nœud de données,
un nouvel index de clé de nœud de données est généré pour ce nœud de données,
une clé de nœud de données est calculée et définie en tant que clé de nœud de données actuelle, en correspondant au résultat d'une fonction de hachage sécurisée appliquée au moins à l'identifiant de nœud de données du nœud de données, au nouvel index de clé de nœud de données et à la clé de nœud de données actuelle du nœud de données père,
et **une liste volatile de clé de nœud de données** est créée ou étendue, qui contient une colonne d'index de clé de nœud de données et une colonne de clé de nœud de données, en insérant à la fin de cette liste volatile le nouvel index de clé de nœud de données et la clé de nœud de données calculée précédemment, qui devient la clé de nœud de données actuelle,
et **une liste non volatile de paramètres de clé de nœud de données** est créée ou complétée pour ce nœud de données qui contient une colonne d'index de nœud de données et une colonne d'index de nœud de données père, en insérant à la fin de cette liste non volatile le nouvel index de clé de nœud de données du nœud de données dans la colonne d'index de nœud de données et en insérant le dernier index de clé de nœud de données actuel de la liste de paramètres de clé de nœud de données du nœud de données père dans la colonne d'index de nœud de données père, et en ne stockant ainsi de manière non volatile que des index publics en tant que représentants des clés au lieu de clés secrètes,
avant de stocker les données d'un nœud de données
le chemin dans la structure arborescente est déterminé à partir du nœud de données racine jusqu'à ce nœud de données,
et ce chemin déterminé est suivi, nœud de données par nœud de données, en commençant par le premier enfant de nœud de données racine,
et la dernière entrée de la liste non volatile des paramètres de clé de nœud de données d'un nœud de données et de son nœud de données père est comparée,
et dès que la dernière entrée de la colonne d'index de nœud de données père d'un nœud de données n'est pas identique à la dernière entrée de la colonne d'index de nœud de données de la liste de paramètres de clé de nœud de données de son nœud de données père, on applique à ce nœud de données et aux nœuds de données suivants sur le chemin
**l'étape de génération de clé de nœud de données** définie précédemment,
et les données de chaque nœud de données sont cryptées avec la clé de nœud de données actuelle du nœud de données qui leur est associé, et la liste non volatile de paramètres de clé de nœud de données associée au nœud de données est enregistrée.

2. Procédé selon la revendication 1, dans lequel la numérotation continue des lignes de la liste non volatile de paramètres de clé de nœud de données est utilisée comme index de clé de nœud de données pour un nœud de données, un nouvel index de clé de nœud de données étant calculé en augmentant de un le dernier numéro de ligne actuel,
et ainsi, le stockage de la colonne d'index de nœud de données dans la liste non volatile de paramètres de clé de nœud de données n'est pas nécessaire, car il résulte de la numérotation séquentielle.

3. Procédé selon la revendication 2, dans lequel la liste de paramètres de clé de nœud de données est convertie en une liste **comprimée** de paramètres de clé de nœud de données, et seule cette dernière est stockée sur le dispositif de stockage non volatile, des zones à l'intérieur de la liste de paramètres de clé de nœud de données étant regroupées de telle sorte que des zones avec des entrées identiques et des zones avec des entrées consécutives sont respectivement représentées par une valeur dans la liste comprimée de paramètres de clé de nœud de données.

4. Procédé selon la revendication 2 ou 3, dans lequel la liste de paramètres de clé de nœud de données est convertie en une liste **comprimée** de paramètres de clé de nœud de données et seule cette dernière est stockée sur le dispositif de stockage non volatile en définissant le nombre 0 comme l'index de comparaison actuel et le premier index de nœud de données père dans la liste de paramètres de clé de nœud de données comme l'index de comparaison suivant, la valeur 1 comme l'intervalle de comparaison actuel et la valeur 0 comme le compteur d'intervalle de comparaison actuel,
et **une étape de comparaison** est définie, dans laquelle la différence entre l'index de comparaison suivant et l'index de comparaison actuel est calculée, et
si la différence calculée est **égale** à l'intervalle de comparaison actuel, le compteur d'intervalle de comparaison actuel est augmenté de la valeur 1,
si la différence calculée **n'est pas égale** à l'intervalle de comparaison actuel et est **supérieure à 1,**
et si le compteur d'intervalle de comparaison actuel est supérieur à 0, celui-ci est ajouté à la dernière position dans la liste comprimée des paramètres de clé de nœud de données,
la différence est affectée d'un signe négatif et ajoutée à la fin de la liste comprimée des paramètres de clé de nœud de données, et l'intervalle de comparaison actuel est fixé à la valeur 1 et le compteur d'intervalle de comparaison actuel à 0,
si la différence calculée **n'est pas égale** à l'intervalle de comparaison actuel et est **inférieure ou égale à 1,**
le compteur d'intervalle de comparaison actuel est ajouté à la dernière position de la liste comprimée de paramètres de clé de nœud de données, l'intervalle de comparaison actuel est modifié en fonction de sa valeur à 0 ou 1, et le compteur d'intervalle de comparaison actuel est fixé à 1,
puis l'index de comparaison précédemment suivant devient l'index de comparaison actuel et l'index de nœud de données père suivant cet index de comparaison maintenant actuel devient l'index de comparaison suivant,
et cette étape de comparaison est appliquée à l'index de comparaison actuel et à l'index de comparaison suivant jusqu'à ce que l'index de comparaison actuel corresponde au dernier index de nœud de données père, et enfin, le compteur d'intervalle de comparaison actuel est ajouté à la dernière position de la liste de paramètre de clé de nœud de données comprimée, s'il est supérieur à 0.
